# FASCICULE DE BREVET EUROPEEN

(11) **EP 1 064 070 B1**
(45) Date de publication et mention de la délivrance du brevet: **02.01.2003**
(21) Numéro de dépôt: 99900953.3
(22) Date de dépôt: 19.01.1999
(51) Int. Cl.: B01D 29/39, B01D 29/66, B01D 29/86

(54) **EQUIPEMENT DE SEPARATION SOLIDE-LIQUIDE NOTAMMENT POUR L'EPURATION BIOLOGIQUE D'EAUX USEES**
VORRICHTUNG ZUR FEST-FLÜSSIGKEITTRENNUNG, INSBESONDERE ZUR BIOLOGISCHEN REINIGUNG VON ABWASSER
SOLID-LIQUID SEPARATING EQUIPMENT IN PARTICULAR FOR BIOLOGICAL PURIFICATION OF WASTE WATER

(30) Priorité: 16.03.1998 FR 9803197
(43) Date de publication de la demande: 03.01.2001
(73) Titulaire: Suez Lyonnaise des Eaux, 92753 Nanterre Cedex (FR); ONDEO DEGREMONT, 92500 Rueil-Malmaison (FR)
(72) Inventeur: GEAUGEY, Valérie, F-78580 Maule (FR); DUVAL, Catherine, F-91100 Corbeil Essonnes (FR); LE BARS, Franck, F-78380 Bougival (FR)
(74) Mandataire: Armengaud Ainé, Alain
(86) Numéro de dépôt international: FR9900094
(87) Numéro de publication internationale: WO99047233

(56) Documents cités:
- WO-A-94/00217

## Description

La présente invention est relative aux équipements de séparation solide/liquide réalisée par filtration sur matériaux membranaires ou textiles. Plus particulièrement, l'invention concerne des perfectionnements apportés aux équipements de filtration du type ci-dessus, destinés de façon plus spécifique au traitement des suspensions de boues résultant d'épurations physico-chimiques ou biologiques (boues activées, liqueurs mixtes). Elle s'applique notamment à l'épuration d'eaux usées par voie biologique.

On sait que l'épuration biologique des eaux usées repose sur la culture de bactéries épuratrices dans des systèmes spécifiques. Le système le plus couramment utilisé est la boue activée, c'est-à-dire une culture de ces bactéries en suspension dans de l'eau traitée, couramment appelée liqueur mixte. De nouveaux systèmes, appelés cultures mixtes mettent en oeuvre ces boues en les mélangeant à un matériau support en suspension.

L'efficacité et la fiabilité de ces systèmes reposent sur la séparation entre cette boue activée et l'eau traitée, cette séparation constituant la clarification. A l'heure actuelle, la clarification est assurée dans la quasi totalité des cas par décantation et, dans quelques cas particuliers par filtration. On se reportera à cet effet au "Memento Technique de l'Eau" Tome 2; 9^{ème} Edition 1989, édité par Degremont.

On rappellera ci-après les caractéristiques essentielles de ces deux techniques connues de clarification :
- Les décanteurs secondaires ou clarificateurs sont des ouvrages conçus de façon à séparer la liqueur mixte de l'eau traitée par simple décantation. La mise en oeuvre de ces clarificateurs dans des stations de traitement d'eaux résiduaires comporte deux limitations majeures : d'une part la concentration en boues dans le bassin biologique est plafonnée à six grammes de matières sèches par litre de liqueur mixte ce qui se traduit par des volumes d'ouvrages importants et d'autre part, il est nécessaire, dans la mesure où on procède à une nitrification, de dénitrifier l'effluent afin d'éviter la flottation des boues dans l'ouvrage et par conséquent, des fuites de matières en suspension dans l'eau traitée.

Par ailleurs, une grande partie des stations existantes doivent faire face à de multiples problèmes qui détériorent la décantabilité des boues notamment : des proliférations de bactéries filamenteuses provoquant des problèmes de foisonnement et de moussage, des variations de pH ou de salinité, ainsi que des arrivées de produits toxiques, qui sont souvent la cause de perturbations graves de la décantation.

En résumé, les dysfonctionnements des clarificateurs sont fréquents et ils aboutissent souvent à des fuites dramatiques de boues vers les étapes de traitement ultérieures ou dans le milieu naturel : ce manque de fiabilité est donc incompatible avec les nouvelles normes de rejet.
- Dans la clarification par filtration, la filtration est assurée par des membranes d'ultrafiltration (présentant des pores de dimension généralement comprises entre 0,001 et 0,1 µm) ou de micro-filtration (avec une taille de pores généralement comprise entre 0,05 et 5 µm). Ces procédés de séparation lorsqu'ils sont appliqués au domaine de la filtration des boues biologiques sont généralement connus sous l'appellation de BRM (Bio Réacteurs à Membranes). Dans tous ces systèmes, de l'énergie est appliquée dans la boue, à la surface de la membrane, afin de limiter son encrassement et d'accroître les flux et/ou la durée de la filtration.

Un premier type de BRM (JP-A-62 065 791) est caractérisé par le fait que l'on utilise une membrane située à l'extérieur du bassin biologique pour réaliser la séparation, ce qui permet d'appliquer une grande quantité d'énergie utile à la surface de la membrane. Dans ce cas, les boues sont amenées à circuler à grand débit dans le filtre, tangentiellement à la membrane, afin de limiter son encrassement. La pression de transfert (PTM : Pression Trans Membranaire) est comprise entre 0,5.10⁵ Pa et 5.10⁵Pa. De cette façon, on obtient des flux de filtration de l'ordre de 50 à 200 l/h par m² de membrane. Ces flux sont maintenus pendant des durées de l'ordre de 1 à 2 semaines avant colmatage de la membrane, qui est ensuite régénérée chimiquement. La principale limite de ces BRM réside dans la consommation énergétique liée à la circulation de la boue dans le filtre. Les débits importants requis induisent en effet une consommation électrique de l'ordre de 1 à 5 kWh par m³ d'eau traitée. Pour cette raison, le domaine d'application de ces BRM est limité aux installations de faible capacité et plus particulièrement pour des effluents très pollués.

Un second type de BRM (JP-A-62 065 792) est caractérisé par le fait que la filtration des boues s'effectue sur des membranes situées dans le bassin biologique. Dans ce cas, le filtre est immergé directement dans le bassin biologique, des turbulences par aération et/ou agitation étant mises en oeuvre au sein des boues à filtrer. L'eau traitée est recueillie gravitairement ou par pompage par aspiration au travers de la membrane, ce qui se traduit par des pressions de transfert généralement comprises entre 0,1.10⁵ Pa et 10⁵ Pa. Le niveau d'énergie qui est appliqué à la surface de la membrane est plus faible que pour le premier type de BRM décrit ci-dessus, ce qui permet de réduire la consommation énergétique. Cependant, les flux obtenus ne sont plus que de l'ordre de 5 à 50 litres par heure et par m² de membrane. Ces faibles flux conduisent alors à la mise en oeuvre de surfaces filtrantes importantes dont le coût pénalise très fortement le procédé notamment pour des installations de grande capacité et plus particulièrement lorsque les effluents sont peu concentrés.

WO 94 00217 fait connaître un équipement de séparation d'une suspension solide/liquide par filtration, notamment des boues d'une liqueur d'épuration biologique ou physico-chimique constitué d'éléments filtrants immergés dans la suspension à traiter, de moyens assurant un balayage gazeux positionnés en dessous des éléments filtrants de manière que les bulles gazeuses émises par lesdits moyens de balayage s'écoulent le long des éléments filtrants et une goulotte recueillant l'eau traitée.

Par ailleurs, il existe d'autres procédés de filtration qui combinent les performances de flux élevé et de faible consommation énergétique, mais, à des degrés divers, ces procédés connus se révèlent non adaptés à la filtration de suspensions biologiques concentrées. Parmi ces procédés, on notera les procédés à filtration frontale dans lesquels la filtration est réalisée sur un support à porosité grossière recouvert d'une pré-couche préformée (ajout d'une suspension de diatomées...) assurant la séparation réelle (filtres à bougies...), de tels systèmes fonctionnant en discontinu, par cycles « filtration/décolmatage/établissement précouche ». Les périodes de filtration se caractérisent par une augmentation progressive de la pression de transfert due à l'accumulation de matières à la surface de la pré-couche et à la migration de fines particules à l'intérieur de cette couche. Cette pression structure le dépôt à la surface du support grossier de filtration. Lorsque la pression atteint une valeur critique de l'ordre de 10⁵ Pa à 10⁶ Pa, l'ensemble « pré-couche + particules piégées » rendu cohérent par la pression est éliminé par un lavage très énergique à l'air ou à l'eau à contre courant. Malheureusement, ces procédés s'appliquent difficilement à la filtration de suspensions biologiques car ces particules sont le plus souvent très compressibles : lorsque les suspensions sont concentrées, la croissance rapide du dépôt de particules à la surface du support de filtration entraîne une augmentation dramatique de la résistance hydraulique, ce qui se traduit par un arrêt de la filtration.

En conclusion, les techniques de filtration par BRM constituent, pour des installations de faible capacité, une alternative technique satisfaisante aux procédés de clarification conventionnels par décantation ; par contre, leur coût de construction et/ou d 'exploitation demeure plus élevé que celui desdits procédés conventionnels. Pour des capacités importantes, supérieures à quelques milliers de m³ par jour, il n'existe, à l'heure actuelle, aucune solution satisfaisante. La présente invention se propose précisément d'apporter une solution à ce problème.

En conséquence, la présente invention a pour objet un équipement de séparation d'une suspension solide/liquide par filtration, notamment des boues d'une liqueur d'épuration biologique ou physico-chimique, sur matériau filtrant textile ou membranaire qui comprend des éléments filtrants immergés dans la suspension à traiter, des moyens assurant un balayage gazeux positionnés en dessous desdits éléments filtrants et une goulotte recueillant l'eau traitée, caractérisé en ce que lesdits éléments filtrants sont constitués d'au moins une plaque immergée dans la suspension à traiter, ladite plaque étant inclinée par rapport à la verticale et réalisée sous la forme d'une plaque évidée, comportant un ou plusieurs compartiments, dont seule la face inférieure est recouverte du support filtrant, la face supérieure étant pleine, les capacités internes de ladite plaque étant raccordées à ladite goulotte et en ce que lesdits moyens assurant le balayage gazeux sont positionnés à un niveau inférieur à celui des supports filtrants.

Selon un mode de réalisation de cette invention, l'équipement de séparation est constitué de plusieurs plaques évidées, comportant un ou plusieurs compartiments, lesdites plaques étant disposées, de préférence, parallèlement les unes aux autres.

Elles peuvent être équidistantes entre elles ou bien, séparées les unes des autres, selon un pas variable.

Selon la présente invention, la reprise de l'eau traitée par l'intermédiaire dudit collecteur ou de ladite goulotte peut s'effectuer soit en partie supérieure ou latérale de la ou desdites plaques, soit en partie basse de ces dernières, ce dernier mode de mise en oeuvre permettant d'éviter ou à tout le moins de limiter les accumulations de dépôt.

Selon un mode de réalisation préféré de cet équipement de séparation, la ou lesdites plaques sont inclinées d'environ 5 à 60 degrés par rapport à la verticale. Dans l'exemple de réalisation dans lequel on prévoit plusieurs plaques, l'espacement de ces dernières est compris de préférence entre 0,5 et 20 cm environ.

De préférence, selon la présente invention, le support filtrant est un support grossier en un matériau membranaire ou textile présentant une porosité comprise entre 0,2 et 100 µm.

Selon la présente invention, les moyens de balayage gazeux peuvent être réalisés sous la forme d'un réseau de diffuseurs d'air, disposés en dessous des membranes filtrantes. Ces diffuseurs peuvent être disposés au fond de la cuve ou bassin biologique recevant l'équipement, et leurs orifices débouchent sous la ou les plaques de filtration ou à la partie inférieure de ladite cuve.

Selon un autre mode de réalisation de l'invention, les moyens de balayage gazeux sont intégrés à la ou auxdites plaques, ces moyens étant réalisés sous la forme d'enceintes séparées prolongeant la partie inférieure de chaque plaque et qui sont alimentées en gaz par une conduite d'alimentation, chacune desdites enceintes étant munie d'au moins une ouverture d'évacuation qui est positionnée de manière que les bulles gazeuses s'écoulent le long du support filtrant de chaque plaque.

Selon l'invention, le gaz peut être de l'air, de l'oxygène, un gaz ozoné ou un gaz inerte et son débit est de préférence de l'ordre de 0,05 à 10 m³/h par mètre linéaire de largeur de plaque.

Selon l'invention, l'injection de gaz s'effectue de manière continue, discontinue, de façon périodique ou aléatoire, à débit constant ou variable.

D'autres caractéristiques et avantages de la présente invention ressortiront de la description faite ci-après en référence au dessin annexé qui en illustre deux exemples de réalisation dépourvus de tout caractère limitatif. Sur le dessin :
- la figure 1 est une vue schématique en coupe verticale représentant un ouvrage de séparation mettant en oeuvre un premier mode de réalisation de l'équipement selon la présente invention et,
- la figure 2 est une vue schématique similaire à la figure 1 illustrant un second exemple de réalisation de la présente invention.

Ainsi qu'on le comprend de la description ci-dessus, l'invention consiste à réaliser la filtration à basse pression (comprise entre 10 et 10⁴ Pa, de préférence de l'ordre de 10² Pa) sur un matériau textile ou membranaire. On notera que la pression de filtration est bien inférieure aux valeurs utilisées à l'heure actuelle.

Le principe à la base de l'invention consiste à créer à la surface du support filtrant les conditions hydrauliques permettant de maintenir une couche de matières d'épaisseur suffisamment mince de telle manière que la pression de transfert reste faible.

Ainsi qu'on l'a mentionné ci-dessus et comme on le décrira en détail ci-après, ces conditions hydrauliques sont assurées par des moyens de balayage gazeux de la couche du support de filtration.

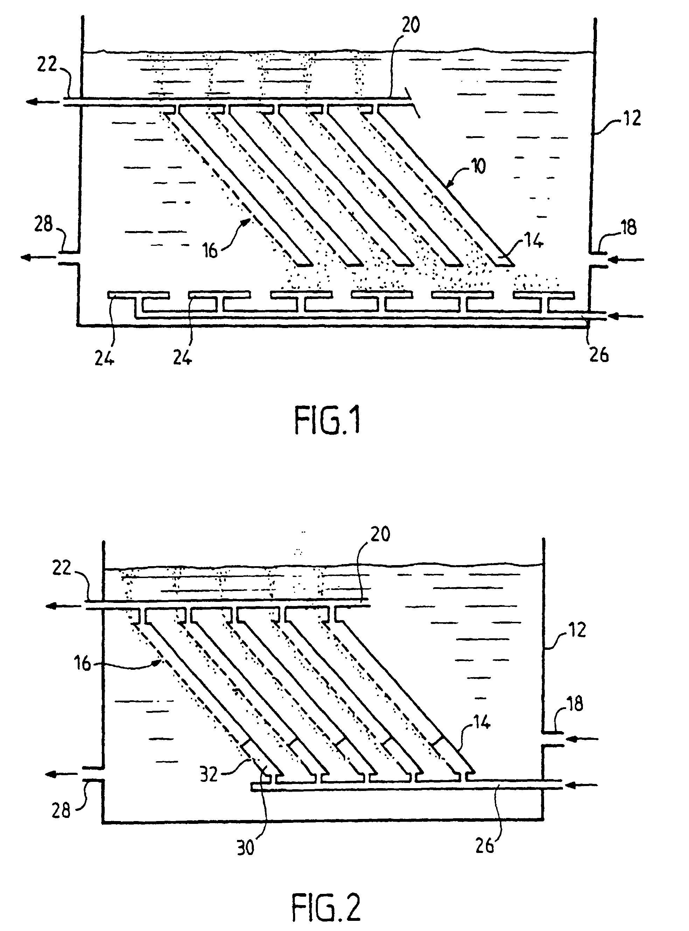

On se réfère maintenant à la figure 1 qui représente un premier exemple de réalisation de l'équipement de filtration objet de la présente invention. Dans cet exemple de réalisation non limitatif, l'équipement comporte plusieurs plaques.

Cet équipement de filtration désigné dans son ensemble par la référence 10 est immergé dans la cuve 12 contenant la suspension à traiter qui est admise en 18. Cet équipement 10 est constitué ici d'une pluralité de plaques évidées, telles que 14, comportant un ou plusieurs compartiments, ces plaques étant disposées dans la cuve 12, de manière inclinée, de préférence selon un angle de 5 à 60 degrés par rapport à la verticale. Dans cet exemple de réalisation non limitatif, les plaques 14 sont disposées parallèlement les unes aux autres avec un espacement déterminé, par exemple compris entre 0,5 et 20 cm environ. Dans cet exemple de réalisation, les plaques 14 sont équidistantes : il ne s'agit là que d'un exemple, l'espacement entre les plaques pouvant être variable. L'eau traitée après filtration au travers des plaques 14 est collectée par une conduite 20, qui dans cet exemple de réalisation est prévue à la partie supérieure du bac 12, l'eau traitée étant ensuite évacuée de ce dernier par l'intermédiaire de l'orifice d'évacuation 22. Bien entendu, sans sortir du cadre de l'invention, la reprise de l'eau traitée peut être effectuée en tout emplacement du module filtrant, c'est-à-dire de chaque plaque 14, par exemple en partie basse des chambres de collecte de perméat des plaques 14, ce qui permet d'éviter ou à tout le moins de limiter les accumulations de dépôt.

En variante, la reprise d'eau traitée peut être réalisée à l'aide d'une goulotte, notamment en partie latérale de la ou desdites plaques.

Les boues concentrées sont évacuées du bac 12 par l'intermédiaire de l'orifice d'évacuation 28.

Sur la surface inférieure 16 de chacune des plaques 14 est disposé le support de filtration réalisé sous la forme d'un support en matériau membranaire ou textile présentant une porosité comprise entre 0.2 et 100 µm.

Selon la présente invention. dans l'exemple de réalisation non limitatif illustré sur le dessin, les moyens de balayage de gaz sont prévus à la partie inférieure de la cuve 12. sous les plaques inclinées telles que 14, les bulles de gaz émises par ce balayage s'écoulant le long du support filtrant, c'est-à-dire le long de la surface inférieure 16 de chacune des plaques. Selon l'invention, le débit gazeux ainsi injecté est de l'ordre de 0,05 à 10 m³ par heure et par mètre linéaire de largeur de plaque, l'injection de gaz pouvant être réalisée de manière continue ou discontinue, de façon périodique ou aléatoire, à débit constant ou variable.

Les plaques 14 sont caractérisées par trois paramètres : leur largeur, leur hauteur, leur épaisseur. Le débit gazeux injecté par mètre linéaire de plaque, s'applique à la largeur de ces plaques. Ce débit est indépendant de la hauteur ou de l'épaisseur desdites plaques, ce qui implique que ce débit gazeux serait le même pour une plaque de 0,5 mètre ou de 3 mètres de hauteur, par exemple.

Dans l'exemple de réalisation illustré par la figure 1, les moyens permettant de réaliser ce balayage de gaz sont réalisés sous la forme d'une pluralité de diffuseurs tels que 24, positionnés sous les modules de filtration 14 à la partie inférieure de la cuve 12 et qui sont alimentés en gaz sous pression par l'intermédiaire d'une conduite 26.

L'exemple de réalisation illustré par la figure 2 est identique à celui décrit ci-dessus en référence à la figure 1 à l'exception de la conception des moyens permettant de réaliser le balayage gazeux de la surface inférieure 16 de chaque plaque inclinée 14. Dans cette variante, les diffuseurs sont intégrés aux plaques telles que 14. Ces diffuseurs sont donc réalisés sous la forme d'enceintes séparées telles que 30 constituant la partie inférieure de chaque plaque évidée 14, ces enceintes étant alimentées en gaz par la conduite 26 et les bulles de gaz étant émises à l'aide d'au moins une ouverture telle que 32 prévue dans chaque enceinte telle que 30, de manière que les bulles gazeuses viennent s'écouler le long du support filtrant prévu sur la surface inférieure 16 de chaque plaque.

Selon la présente invention, le gaz assurant le balayage peut être de l'air, de l'oxygène, du gaz ozoné (ce qui permet de réaliser des traitements aérobie dans l'ouvrage de séparation 12) ou un gaz inerte (ce qui permet d'effectuer des traitement anoxiques dans la cuve 12).

On soulignera que la réalisation décrite ci-dessus de cet équipement de séparation, conforme à la présente invention, est avantageuse étant donné qu'une mise en oeuvre de plaques similaires aux plaques 14, décrites ci-dessus, mais disposées verticalement, serait moins performante, car, pour garantir un contact entre les bulles de gaz et le support filtrant, nécessaire au contrôle des dépôts sur ledit support filtrant, il faudrait :
- injecter davantage de gaz,
- maîtriser finement l'hydraulique dans la veine liquide, afin d'éviter la formation d'écoulements préférentiels ; dans ce dernier cas, des zones sous-aérées risqueraient de se former et d'être rapidement colmatées. Un tel fonctionnement se traduirait par une hétérogénéité du procédé et, donc, par une forte réduction de ses performances.
- limiter la hauteur des plaques, pour éviter la formation de courants de recirculation de filtrat à partir des compartiments vers la masse de liquide à filtrer, lesdits courants de recirculation étant induits par les différences de densité entre le liquide chargé de bulles, donc allégé, et le filtrat dégazé, donc plus dense.

La disposition inclinée des plaques filtrantes 14, conformément à la présente invention, garantit un contact efficace entre les bulles gazeuses et le support filtrant et offre la possibilité, en jouant sur le débit gazeux (en continu ou en séquences), la taille des bulles formées et l'angle d'inclinaison des plaques. d'ajuster indépendamment :
- la fréquence de renouvellement de la couche de dépôt de matières sur le support filtrant.
- l'épaisseur de cette couche, donc le flux de filtration et la fréquence de colmatage.

Il demeure bien entendu que la présente invention n'est pas limitée aux modes de mise en oeuvre décrits et/ou mentionnés ci-dessus; mais qu'elle en englobe toutes les variantes.

## Revendications

1. Equipement de séparation d'une suspension solide/liquide par filtration, notamment des boues d'une liqueur d'épuration biologique ou physico-chimique, sur matériau filtrant textile ou membranaire, qui comprend des éléments filtrants immergés dans la suspension à traiter, des moyens assurant un balayage gazeux positionnés en dessous desdits éléments filtrants et une goulotte recueillant l'eau traitée, **caractérisé en ce que** lesdits éléments filtrants sont constitués d'au moins une plaque (14) immergée dans la suspension à traiter, ladite plaque étant inclinée par rapport à la verticale et réalisée sous la forme d'une plaque évidée comportant un ou plusieurs compartiments dont seule la face inférieure (16) est recouverte du support filtrant (14) la face supérieure étant pleine, les capacités internes de ladite plaque évidée étant raccordées à ladite goulotte et **en ce que** lesdits moyens assurant le balayage gazeux sont positionnés à un niveau inférieur à celui des supports filtrants.

2. Equipement de séparation selon la revendication 1 **caractérisé en ce qu'**il comporte une pluralité de plaques évidées (14) comportant un ou plusieurs compartiments.

3. Equipement de répartition selon la revendication 2 **caractérisé en ce que** lesdites plaques (14) sont disposées parallèlement les unes aux autres.

4. Equipement selon l'une des revendications 2 ou 3 **caractérisé en ce que** lesdites plaques (14) sont équidistantes.

5. Equipement selon l'une des revendications 2 ou 3 **caractérisé en ce que** lesdites plaques (14) sont séparées les unes des autres selon un pas variable.

6. Equipement selon l'une des revendications 2 à 5 **caractérisé en ce que** lesdites plaques (14) sont disposées avec un espacement compris entre environ 0,5 et 20 cm.

7. Equipement selon l'une quelconque des revendications précédentes **caractérisé en ce que** la reprise de l'eau traitée s'effectue par le collecteur (20) en partie supérieure ou latérale de la ou desdites plaques (14).

8. Equipement selon l'une quelconque des revendications 1 à 6 **caractérisé en ce que** la reprise de l'eau traitée s'effectue par le collecteur (20) en partie basse de la ou desdites plaques (14).

9. Equipement selon l'une quelconque des revendications précédentes **caractérisé en ce que** la ou lesdites plaques (14) sont inclinées de 5 à 60 degrés par rapport à la verticale.

10. Equipement selon l'une quelconque des revendications précédentes **caractérisé en ce que** le support filtrant est un support grossier, en un matériau membranaire ou textile, présentant une porosité comprise entre 0,2 et 100 µm environ.

11. Equipement selon l'une quelconque des revendications précédentes **caractérisé en ce que** les moyens de balayage gazeux sont réalisés sous la forme d'un réseau de diffuseurs (24), positionné en dessous de la ou desdites plaques (14), notamment au fond de la cuve (12) recevant l'équipement et leurs orifices débouchent sous la ou les plaques de filtration (14) ou à la partie inférieure de ladite cuve.

12. Equipement selon l'une quelconque des revendications 1 à 10 **caractérisé en ce que** les moyens de balayage gazeux sont intégrés à la ou auxdites plaques (14) et ils sont réalisés sous la forme d'enceintes séparées (30) prolongeant la partie inférieure de chaque plaque (14) et alimentées en gaz par l'intermédiaire d'une conduite d'alimentation (26), chacune desdites enceintes (30) étant munie d'au moins une ouverture d'évacuation (32) pour le gaz qui est positionnée de manière que les bulles gazeuses s'écoulent le long du support filtrant de la plaque (14) ou de chaque plaque.

13. Equipement selon l'une quelconque des revendications précédentes **caractérisé en ce que** le gaz de balayage du support filtrant est de l'air, de l'oxygène ou du gaz ozoné.

14. Equipement selon l'une quelconque des revendications 1 à 12 **caractérisé en ce que** le gaz de balayage du support filtrant est un gaz inerte.

15. Equipement selon l'une quelconque des revendications précédentes **caractérisé en ce que** le débit du gaz de balayage par mètre linéaire de la largeur de plaque (14) est de l'ordre de 0, 05 à 10 m³/h.

16. Equipement selon l'une quelconque des revendications précédentes **caractérisé en ce que** le gaz de balayage est injecté de manière discontinue, périodique ou aléatoire, à débit constant ou variable.

17. Equipement selon l'une quelconque des revendications précédentes **caractérisé en ce que** le gaz de balayage est injecté de manière continue.

18. Equipement selon l'une quelconque des revendications précédentes **caractérisé en ce qu'**il fonctionne sous une pression comprise entre 10 et 10⁴ Pa.

19. Equipement selon l'une quelconque des revendications précédentes **caractérisé en ce qu'**il fonctionne sous une pression voisine de 10² Pa.

## Patentansprüche

1. Vorrichtung zum Trennen einer fest/flüssigen Suspension, insbesondere von Schlamm von einer Flüssigkeit aus einer biologischen oder physiko-chemischen Reinigung, durch Filtration über einem textilen oder Membranfiltermaterial, die umfasst : in die zu behandelnde Suspension eingetauchte Filterelemente, unter besagten Filterelementen angeordnete Mittel zum Sicherstellen einer Gasspülung, und eine Ableitung zum Sammeln des behandelten Wassers, **dadurch gekennzeichnet, dass** die Pilterelemente aus mindestens einer in die zu behandelnde Suspension eingetauchten Platte (14) gebildet sind, wobei besagte Platte in Bezug auf die Vertikale geneigt und in Form einer hohlen, ein oder mehrere Abteile umfassenden Platte ausgebildet ist, wobei nur deren Unterseite (16) mit dem Filterträger (14) bedeckt und die Oberseite voll ist, die inneren Hohlräume der hohlen Platte an die Ableitung angeschlossen sind, und dadurch, dass die die Gasspülung sicherstellenden Mittel auf einem Niveau unter dem der Filterträger angeordnet sind.

2. Trennvorrichtung nach Anspruch 1, **dadurch gekennzeichnet, dass** sie eine Vielzahl hohler Platten (14) umfasst, die ein oder mehrere Abteile umfassen.

3. Trennvorrichtung nach Anspruch 2, **dadurch gekennzeichnet, dass** die besagten Platten (14) parallel zueinander angeordnet sind.

4. Vorrichtung nach einem der Ansprüche 2 oder 3, **dadurch gekennzeichnet, dass** die Abstände zwischen den besagten Platten (14) gleich sind.

5. Vorrichtung nach einem der Ansprüche 2 oder 3, **dadurch gekennzeichnet, dass** die besagten Platten (14) voneinander durch variable Abstände getrennt sind.

6. Vorrichtung nach einem der Ansprüche 2 bis 5, **dadurch gekennzeichnet, dass** die besagten Platten (14) mit einem zwischen 0,5 und 20 cm liegenden Abstand voneinander verteilt sind.

7. Vorrichtung nach einem der vorstehenden Ansprüche, **dadurch gekennzeichnet, dass** das behandelte Wasser von dem Sammler (20) oberhalb oder seitlich von der oder den besagten Platte(n) aufgenommen wird.

8. Vorrichtung nach einem der Ansprüche 1 bis 6, **dadurch gekennzeichnet, dass** das behandelte Wasser von dem Sammler (20) im unteren Teil der besagten Platte(n) aufgenommen wird.

9. Vorrichtung nach einem der vorstehenden Ansprüche, **dadurch gekennzeichnet, dass** die besagte(n) Platte(n) in Bezug auf die Vertikale um 5 bis 60° geneigt ist (sind).

10. Vorrichtung nach einem der vorstehenden Ansprüche, **dadurch gekennzeichnet, dass** der Filterträger ein grobfädiger Träger aus einem membranartigen oder textilen Material ist, das eine Porosität zwischen etwa 0,2 und 100 µm hat.

11. Vorrichtung nach einem der vorstehenden Ansprüche, **dadurch gekennzeichnet, dass** die Gasspülungsmittel in Form eines Netzes aus Diffusoren (24) ausgeführt sind, das unterhalb der Platte(n) (14) und insbesondere am Boden des die Vorrichtung aufnehmenden Beckens (12) angeordnet ist, wobei ihre Öffnungen unter der/den Filtrationsplatte(n) oder im unteren Teil dieses Beckens ausmünden.

12. Vorrichtung nach einem der Ansprüche 1 bis 10, **dadurch gekennzeichnet, dass** die Gasspülungsmittel in die Platte(n) (14) integriert und in Form getrennter Kammern (30) ausgeführt sind, die den unteren Teil der Platte(n) verlängern und denen über eine Zuleitung (26) Gas zugeführt wird, wobei jede der Kammern (30) mit mindestens einer Austrittsöffnung (32) für das Gas versehen ist, die derart angeordnet ist, dass die Gasblasen entlang dem Filterträger der Platte (14) oder jeder Platte perlen.

13. Vorrichtung nach einem der vorstehenden Ansprüche, **dadurch gekennzeichnet, dass** das Spülgas des Filterträgers Luft, Sauerstoff oder ozonhaltiges Gas ist.

14. Vorrichtung nach einem der Ansprüche 1 bis 12, **dadurch gekennzeichnet, dass** das Spülgas des Filterträgers ein Inertgas ist.

15. Vorrichtung nach einem der vorstehenden Ansprüche, **dadurch gekennzeichnet, dass** der Spülgasstrom pro Linearmeter Breite der Platte (14) etwa 0,05 bis 10 m³/h beträgt.

16. Vorrichtung nach einem der vorstehenden Ansprüche, **dadurch gekennzeichnet, dass** das Spülgas mit konstanter oder variabler Durchströmung diskontinuierlich, regelmäßig oder zufallsabhängig eingeleitet wird.

17. Vorrichtung nach einem der vorstehenden Ansprüche, **dadurch gekennzeichnet, dass** das Spülgas kontinuierlich eingeleitet wird.

18. Vorrichtung nach einem der vorstehenden Ansprüche, **dadurch gekennzeichnet, dass** sie bei einem Druck zwischen 10 und 10⁴ Pa arbeitet.

19. Vorrichtung nach einem der vorstehenden Ansprüche, **dadurch gekennzeichnet, dass** sie bei einem Druck von nahe bei 10² Pa arbeitet.

## Claims

1. Equipment for separating a solid/liquid suspension by filtration, particularly of sludge from a biological or physicochemical purifying liquor, on membrane or textile filtering material, which comprises filtering elements immersed in the suspension to be treated, gas scavenging means located below said filtering elements and a channel collecting the treated water, characterized in that said filtering elements are constituted by at least one plate (14) immersed in the suspension to be treated, said plate being inclined with respect to the vertical and implemented in the form of a hollowed out plate having one or several compartments, whereof only the lower face (16) is covered with the filtering support (14), the upper face being solid, the internal depressions of said hollowed out plate being connected to said channel collecting the treated water and in that the gas scavenging means are positioned at a level below that of the filtering supports.

2. Separating equipment according to claim 1, **characterized in that** it has a plurality of hollowed out plates (14) having one or several compartments.

3. Separating equipment according to claim 2, **characterized in that** said plates (14) are positioned parallel to one another.

4. Equipment according to one of the claims 2 or 3, **characterized in that** said plates (14) are equidistant.

5. Equipment according to one of the claims 2 or 2, **characterized in that** said plates (14) have a variable mutual spacing.

6. Equipment according to one of the claims 2 to 5, **characterized in that** said plates (14) are arranged with a spacing between approximately 0.5 and 20 cm.

7. Equipment according to any one of the preceding claims, **characterized in that** the return of the treated water takes place by the collector (20) in the upper or lateral part of said plate or plates (14).

8. Equipment according to any one of the claims 1 to 6, **characterized in that** the return of the treated water takes place by the collector (20) in the lower part of said plate or plates (14).

9. Equipment according to any one of the preceding claims, **characterized in that** the plate or plates (14) are inclined by 5 to 60° with respect to the vertical.

10. Equipment according to any one of the preceding claims, **characterized in that** the filtering support is a coarse support of a membrane or textile material and having a porosity between approximately 0.2 and 100 µm.

11. Equipment according to any one of the preceding claims, **characterized in that** the gas scavenging means are in the form of a system of diffusers (24), positioned below said plate or plates (14) and in particular on the bottom of the tank (12) receiving the equipment and their orifices issue beneath said filter plate or plates (14) or in the lower part of said tank.

12. Equipment according to any one of the claims 1 to 10, **characterized in that** the gas scavenging means are integrated into said plate or plates (14) and are in the form of separate enclosures (30) extending the lower part of each plate (14) and supplied with gas by means of a supply pipe (26), each of said enclosures (30) being provided with at least one discharge opening (32) for the gas and which is positioned in such a way that gas bubbles flow along the filtering support of the or each plate (14).

13. Equipment according to any one of the preceding claims, **characterized in that** the scavenging gas of the filtering support is air, oxygen or ozonized gas.

14. Equipment according to any one of the claims 1 to 12, **characterized in that** the scavenging gas of the filtering support is an inert gas.

15. Equipment according to any one of the preceding claims, **characterized in that** the scavenging gas flow rate per linear metre of the width of the plate (14) is approximately 0.05 to 10 m²/h.

16. Equipment according to any one of the preceding claims, **characterized in that** the scavenging gas is injected discontinuously, periodically or in random manner at a constant or variable flow rate.

17. Equipment according to any one of the preceding claims, **characterized in that** the scavenging gas is injected continuously.

18. Equipment according to any one of the preceding claims, **characterized in that** it operates under a pressure between 10 and 10⁴ Pa.

19. Equipment according to any one of the preceding claims, **characterized in that** it operates under a pressure close to 10^{a} Pa.
